# FASCICULE DE BREVET EUROPEEN

(11) **EP 2 510 480 B1**
(45) Date de publication et mention de la délivrance du brevet: **10.01.2018**
(21) Numéro de dépôt: 10787407.5
(22) Date de dépôt: 02.12.2010
(51) Int. Cl.: G06K 19/077, G06K 7/08, H01Q 1/22, G21F 7/04, G21F 7/00

(54) **DISPOSITIF D'IDENTIFICATION D'UN SUPPORT METALLIQUE PRESENT DANS UN ENVIRONNEMENT POUSSIEREUX ET METALLIQUE, A ENCOMBREMENT REDUIT ET APPLICATION A L'IDENTIFICATION DE CONTENEUR CONTENANT DES ELEMENTS DE COMBUSTIBLE NUCLEAIRE DANS LEUR USINE DE FABRICATION**
VORRICHTUNG ZUR IDENTIFIZIERUNG EINER METALLSTÜTZE IN EINER STAUBIG, METALLISCHEN UND REDUZIERTEN RAUM-UMWELT UND VERFAHREN ZUR IDENTIFIZIERUNG VON BEHÄLTER, DIE NUKLEARE KRAFTSTOFFEELEMENTE IN IHRER HERSTELLUNGSANLAGE ENTHALTEN
DEVICE FOR IDENTIFICATION OF A METAL SUPPORT IN A DUSTY, METALIC AND REDUCED SPACE ENVIRONMENT AND METHOD TO IDENTIFICATION OF CONTAINER CONTAINING NUCLEAR FUEL ELEMENTS IN THEIR MANUFACTURING PLANT

(30) Priorité: 07.12.2009 FR 0958702
(43) Date de publication de la demande: 17.10.2012
(73) Titulaire: Areva NC, 75009 Paris (FR)
(72) Inventeur: LANTHEAUME, Noël, F-30580 Vallerargues (FR); MARCHAL, Jean-Jacques, F-34800 Lieuran-Cabrieres (FR)
(74) Mandataire: Ilgart, Jean-Christophe
(86) Numéro de dépôt international: PCT/EP2010/068692
(87) Numéro de publication internationale: WO 2011/069878

(56) Documents cités:
- WO-A1-03/096478
- WO-A2-2004/100309
- WO-A2-2006/039461
- WO-A2-2007/066204
- GB-A- 2 422 959

## Description

### DOMAINE TECHNIQUE

L'invention concerne un dispositif d'identification d'un support métallique présent dans un environnement poussiéreux et métallique, à encombrement réduit.

Elle a trait plus particulièrement à l'adaptation d'un système d'identification par radiofréquence (RFID) soumis à des contraintes d'encombrement et aux contraintes métalliques et de poussières d'un support et d'un environnement dans lequel le support est présent.

L'application principale visée par l'invention est l'identification de conteneurs, tels que des hottes, contenant des éléments de combustible nucléaire dans leur usine de fabrication.

On précise ici que dans le cadre de l'invention, les hottes transportent des jarres de poudre, telles que des poudres d'oxyde de plutonium et/ou d'uranium et/ou de chamotte, et ont pour fonction de servir à la fois de protection biologique vis-à-vis de personnes et de véhicule de transport pour les jarres entre par exemple un lieu de stockage et différents postes de production d'une unité.

### ART ANTÉRIEUR

Dans une usine de fabrication, l'identification des conteneurs lors de chaque transfert d'une unité de fabrication ou de stockage vers une autre unité, doit être garantie afin d'assurer à la fois :
- la gestion et le suivi des matières nucléaires conformément aux prescriptions des autorités de sureté nationales et internationales,
- la traçabilité du produit combustible tout au long du processus de fabrication.

En tant que dispositif d'identification des conteneurs, on utilise généralement dans l'industrie nucléaire le marquage par code à barres associé à un lecteur optique. Ce type de dispositif ne donne pas pleinement satisfaction, dans l'environnement défini par une boite à gants dans les postes d'unité « poudre », car le milieu est confiné et poussiéreux. Les fines particules se déposent sur l'étiquette et le lecteur. Le contraste du code barre diminue réduisant ainsi sa lisibilité. Le lecteur optique s'empoussière également et vieillit rapidement.

Pour des raisons de distance et d'encrassement des panneaux translucides des boites à gants, la technologie actuelle ne permet pas d'envisager un résultat fiable en implantant les lecteurs à l'extérieur de la boite à gants pour les protéger des poussières et des radiations.

Les inventeurs ont alors cherché dans un premier temps à cerner l'ensemble des contraintes liées à cet environnement en boite à gants puis dans un deuxième temps ils ont procédé à une revue des diverses technologies alternatives couramment utilisées dans l'industrie.

Ils sont alors parvenus à la conclusion qu'un dispositif d'identification par radio fréquence (RFID) était intrinsèquement le mieux à même de répondre à l'environnement car il permet d'avoir :
- un taux objectif de réussite de lecture de 100%,
- un lecteur implanté en dehors de la boite à gants,
- une lecture rapide,
- une lecture insensible à la poussière.

Par contre, ils sont arrivés à la conclusion que les dispositifs d'identification RFID sur le marché n'étaient pas adaptés à l'environnement de faibles dimensions et fortement métallique créé par la boite à gants elle-même avec ou sans ses obturateurs des passages de gants et par le conteneur à identifier.

Un but de l'invention est alors de proposer un dispositif d'identification par radiofréquence (RFID) d'un conteneur contenant des éléments de combustible nucléaire qui présente un encombrement réduit et qui soit fiable dans l'environnement fortement métallique créé par la boite à gants elle-même avec ou sans ses obturateurs des passages de gants et le conteneur à identifier.

Un but plus général de l'invention est de proposer un dispositif d'identification par radiofréquence (RFID) d'un support métallique présent dans un environnement poussiéreux et fortement métallique qui soit fiable et à encombrement réduit.

Le document WO2004/100309 défini une antenne utilisant un câble coaxial.

### EXPOSÉ DE L'INVENTION

Pour ce faire, selon une première alternative de l'invention, il est prévu un dispositif d'identification d'un support métallique présent dans un environnement fortement métallique susceptible d'être poussiéreux, comprenant une étiquette passive d'identification par radiofréquence (RFID), un porte-étiquette comprenant un élément en ferrite adapté pour être fixé au support métallique et pour agencer l'étiquette à distance de ce dernier comprenant un bouclage en court-circuit agencé à l'intérieur du bouclage de circuit de l'antenne d'étiquette et, un lecteur RFID dont l'antenne comprend, en tant que bouclage d'induction, deux tronçons de câble coaxial de longueur sensiblement identique et comprenant chacun une âme métallique et une tresse métallique entourant l'âme, les deux tronçons étant réunis entre eux d'une part à l'une de leur extrémité en reliant l'âme de l'un à la tresse de l'autre et réciproquement et d'autre part à l'autre de leur extrémité en reliant uniquement leurs tresses entre elles, leurs âmes étant séparées à cette autre extrémité.

Selon une deuxième alternative de l'invention il est prévu un dispositif d'identification d'un support métallique présent dans un environnement fortement métallique susceptible d'être poussiéreux, comprenant une étiquette d'identification par radiofréquence (RFID), un porte-étiquette en matériau isolant électriquement adapté pour être fixé au support métallique et pour agencer l'étiquette à distance de ce dernier et comprenant un logement adapté pour loger complètement l'étiquette et, un lecteur RFID dont l'antenne est constituée de deux tronçons de câble coaxial de longueur sensiblement identique et comprenant chacun une âme métallique et une tresse métallique entourant l'âme, les deux tronçons étant réunis entre eux d'une part à l'une de leur extrémité en reliant l'âme de l'un à la tresse de l'autre et réciproquement et d'autre part à l'autre de leur extrémité en reliant uniquement leurs tresses entre elles, leurs âmes étant séparées à cette autre extrémité.

Dans le cadre de l'invention, l'environnement est dit « fortement métallique » car en son sein se trouvent différents matériels pour la plupart en métal de différente nature (inox, aluminium, acier). Par exemple, lorsque l'environnement est défini par l'intérieur d'une boîte à gants dans le milieu nucléaire, de nombreux sous-ensembles mécaniques sont présents : des moteurs, des convoyeurs constitués de rouleaux en inox sur lesquels une hotte est susceptible d'être transportée, un ascenseur adapté pour faire monter la hotte dans la partie haute de la boite à gants... En outre, sur les parois se trouvent des cerclages métalliques pour la mise en place des gants ainsi que des gamelles adaptées pour réaliser une protection biologique.

Ainsi, grâce à la mise à distance de l'étiquette par rapport au support métallique en l'isolant électriquement, on évite une diminution notable de sa surface effective tout en conservant un encombrement restreint. L'étiquette étant en outre logée de manière complètement étanche dans un logement, ses fonctions ne sont pas altérées dans un environnement poussiéreux.

Le choix de réalisation de l'antenne du lecteur RFID est particulièrement judicieux: il permet d'obtenir une fréquence de résonance intrinsèque, c'est-à-dire hors de la configuration installée dans l'environnement, sensiblement égale à celle de l'étiquette tout en conservant un encombrement restreint. Typiquement, pour une étiquette haute fréquence à 13.56 MHz, on peut utiliser un câble coaxial de capacité moyenne de l'ordre de 97pF et réaliser une longueur totale des deux tronçons de l'antenne lecteur de l'ordre de 1.2mm. Comme expliqué par la suite, le fait de créer une discontinuité dans le câble coaxial comme réalisée permet d'obtenir une surface d'émission augmentée tout en conservant un encombrement restreint.

Le porte-étiquette est une pièce en matériau isolant électriquement comprenant un logement à glissière dans laquelle l'étiquette RFID peut coulisser. Avantageusement, la pièce en matériau isolant électriquement est à base de polyéthylène (PEHD). Ce choix simple permet de ne pas modifier l'inductance et ainsi la fréquence d'auto-résonance de l'étiquette.

De préférence, les dimensions du porte-étiquette sont adaptées pour agencer l'étiquette à une distance d'au moins 4 mm, de préférence 12 mm, du support métallique. Comme expliqué par la suite, les inventeurs ont établi qu'à cette distance, l'étiquette présente une dimension de sa surface effective suffisante pour être activée et lue, même en mouvement, par l'antenne du lecteur RFID, typiquement implantée à une distance nominale de l'ordre de 275 mm. Les inventeurs ont en outre constaté qu'une valeur de limite de fonctionnement du dispositif d'identification lors d'un déplacement latéral était de l'ordre de 70 mm autour de cette distance nominale soit une distance limite de l'ordre de 345 mm.

Le diamètre des tronçons de câble coaxial est avantageusement inférieur ou égal à 1,05 mm. En utilisant ainsi un câble coaxial avec ces petites dimensions, on altère le moins possible la visibilité des parois translucides d'une enceinte à laquelle l'antenne lecteur RFID est fixée.

Avantageusement, il est prévu une cellule électronique de correction reliée aux âmes séparées de la boucle d'antenne, la cellule comprenant des moyens pour adapter l'impédance et pour accorder la fréquence de la boucle d'antenne en configuration installée dans l'environnement. Ainsi, l'adaptation de l'impédance, typiquement à 50 Ω, et l'accord de la fréquence de l'antenne lecteur, typiquement aux environs de 13.56 MHz peuvent être réalisées au cas par cas en fonction de l'environnement plus ou moins métallique dans lequel le dispositif d'identification est présent.

Pour réaliser l'alimentation de la boucle d'antenne du lecteur, il est prévu de préférence, une boucle primaire qui permet un couplage électromagnétique, la boucle primaire étant reliée à un module électronique du lecteur adapté pour lire des données d'identification issues de l'étiquette passive. Cette solution est privilégiée car elle permet d'amener la puissance en radiofréquence requise sans dégrader la robustesse du résonateur RLC constitué en partie par les tronçons de câble coaxial de correction et tout en permettant leur adaptation à l'impédance requise, typiquement 50 Ω. Comme expliqué par la suite, cette solution par couplage électromagnétique avec boucle primaire permet en outre de ne pas augmenter les dimensions du circuit d'alimentation, puisqu'il est possible d'implanter la boucle primaire à l'intérieur et au plus près de la boucle d'antenne constituée des deux tronçons de câble coaxial.

Selon un mode de réalisation avantageux, l'étiquette est adaptée pour émettre à une fréquence de 13.56 MHZ, les deux tronçons de câble coaxial de l'antenne du lecteur présentent une capacité moyenne de 97pF/m et une longueur totale de l'ordre de 1.2m. Avec ces caractéristiques, on obtient une valeur de fréquence de résonance intrinsèque de l'antenne lecteur, c'est-à-dire en dehors de son implantation en environnement fortement métallique, sensiblement égale à 13.56 MHz, soit la valeur de fréquence de résonance de l'étiquette, et ce malgré la relative faible longueur totale de l'antenne, de l'ordre de 1.2m, compatible avec un environnement de faibles dimensions.

L'invention concerne aussi un conteneur métallique sur lequel est fixé un porte-étiquette du dispositif d'identification tel que décrit précédemment.

Un tel conteneur constitue avantageusement une hotte adaptée pour contenir des éléments de combustible nucléaire, tels que de la poudre d'oxydes de plutonium et/ou d'oxydes d'uranium et/ou de chamotte.

L'invention concerne enfin une enceinte comprenant des parois délimitant un environnement fortement métallique confiné susceptible d'être poussiéreux, avec au moins une paroi sur laquelle est fixée l'antenne du lecteur RFID du dispositif d'identification décrit précédemment.

Avantageusement lorsque les parois de l'enceinte sont translucides, les tronçons d'antenne sont fixés à la périphérie d'une plaque-support transparente elle-même fixée à l'une des parois translucides de l'enceinte. On peut ainsi réaliser une boucle d'antenne la plus étendue possible sans altérer la vision qu'il est possible ou nécessaire d'avoir à travers les parois d'enceinte.

De préférence, afin de ne pas subir trop de déformations, les tronçons d'antenne sont fixés à la périphérie de la plaque-support de sorte que leur rayon de courbure soit inférieur à 4mm tout le long de la périphérie.

Lorsque l'enceinte présente des propriétés de protection biologique vis-à-vis d'un individu placé à l'extérieur, comme lorsque l'une des parois translucides comprend un panneau à base de verre au plomb et un autre panneau à base de verre autre que du plomb, la plaque-support des tronçons d'antenne est de préférence intercalée entre les deux panneaux de la paroi translucide. La boucle d'antenne constituée par les deux tronçons de câble coaxial n'est ainsi pas influencée par l'épaisseur et le matériau (plomb) de la protection biologique.

Lorsque l'enceinte est du type boite à gants, c'est-à-dire lorsqu'une des parois est percée d'orifices entourés chacun d'un cerclage métallique adapté pour recevoir un gant de manipulation d'un conteneur à l'intérieur de l'enceinte, la forme de la plaque-support des tronçons d'antenne épouse avantageusement celle d'au moins un cerclage métallique sans l'entourer. Grâce à un tel agencement, on s'assure que le(s) cerclage(s) métallique(s) concerné(s) est (sont) parcouru(s) par un courant induit par le courant circulant à travers les tronçons d'antenne, qui s'ajoute à ce dernier. En d'autres termes, le(s) cerclage(s) métallique(s) contribue(nt) à augmenter le champ électromagnétique produit par les tronçons d'antenne et nécessaire à l'alimentation de l'étiquette.

De préférence encore, la forme de la plaque-support des tronçons d'antenne épouse celles d'au moins deux cerclages métalliques sans n'en entourer aucun. Cela convient parfaitement lorsque la boite à gants est du type à quatre ronds de gants, agencés par paire à une hauteur différente, les paires étant décalées l'une par rapport à l'autre.

L'invention concerne enfin l'application du dispositif décrit précédemment à l'identification de hottes contenant des éléments de combustibles nucléaires dans leur unité de fabrication. Ces hottes sont par exemple des jarres de poudre et leur identification se fait au niveau de chaque poste de production entre celui de production de poudre et le tunnel de stockage de leur unité de fabrication.

### BRÈVE DESCRIPTION DES DESSINS

D'autres avantages et caractéristiques de l'invention ressortiront mieux à la lecture de la description détaillée faite en référence aux figures 1 à 9 qui représentent respectivement :
- la figure 1 montre une courbe expérimentale illustrant l'influence métallique d'un support à identifier sur la surface effective d'une étiquette RFID,
- la figure 2 montre schématiquement une sonde de mesure de champ magnétique utilisée pour mesurer le champ produit dans l'antenne d'une étiquette RFID dans des conditions d'essai,
- la figure 3 montre une courbe expérimentale illustrant l'influence sur la fréquence de résonance d'une étiquette RFID selon un premier mode de réalisation de l'invention, d'un espaceur placé entre un support métallique à identifier et l'étiquette RFID,
- la figure 4 montre schématiquement un masque de gravure utilisé pour réaliser un circuit correcteur de fréquence de résonance de l'étiquette RFFID selon le premier mode de réalisation de l'invention,
- la figure 5 est une vue en éclaté d'un porte-étiquette avec l'étiquette RFID selon le premier mode de réalisation, le porte-étiquette étant adapté pour être fixé sur un support métallique à identifier,
- les figures 6 et 6A sont respectivement une vue de face et de côté d'un porte-étiquette selon un deuxième mode de réalisation de l'invention, le porte-étiquette étant adapté pour être fixé sur un support métallique à identifier,
- la figure 7 est une vue schématique de face d'une antenne boucle d'un lecteur RFID selon l'invention,
- la figure 8 est une vue schématique de détail montrant la réalisation de l'antenne boucle selon la figure 7,
- la figure 9 représente le schéma électronique de câblage d'un mode de réalisation d'une cellule électronique de correction d'une antenne-lecteur RFID selon l'invention,
- la figure 10 montre en détail une variante de fixation d'une antenne lecteur RFID selon l'invention à une plaque-support,
- la figure 11 montre un mode de réalisation d'alimentation électrique d'une antenne-lecteur selon l'invention par couplage électromagnétique avec une boucle primaire,
- la figure 12 montre un schéma de réglage utilisant la cellule de correction selon la figure 11 et permettant le réglage de l'antenne-lecteur RFID une fois en configuration installée dans un environnement fortement métallique,
- les figures 13A et 13B montrent deux modes d'implantation d'une plaque-support de l'antenne-lecteur RFID selon l'invention dans une enceinte délimitant un environnement fortement métallique.

### EXPOSÉ DÉTAILLÉ DE MODES DE RÉALISATION PARTICULIERS

Le dispositif d'identification selon l'invention utilise comme composants une étiquette passive et un lecteur RFID répondant à la norme ISO 15693.

Typiquement, l'étiquette est une étiquette passive de fréquence égale à 13,56 MHz. Par exemple, l'étiquette est celle commercialisée par la société RAFSEC de dimensions 45*76 mm et incorporant une puce de dénomination commerciale « Philips Icode2 SLI».

Le lecteur RFID utilise quant à lui un module d'une puissance de 1.7 W sur une impédance de 50 Ohm. Par exemple le lecteur utilisé est celui portant comme numéro de pièce « RR-IDISC-MR200-A ».

L'invention concerne à la fois la définition d'un porte-étiquette adapté pour être fixé sur un support métallique et une antenne boucle de lecteur RFID qui permettent de s'affranchir des perturbations éventuelles liées à un environnement fortement métallique, qui est en outre susceptible d'être poussiéreux.

Bien que décrite en référence à une application à l'identification de jarres métalliques contenant de la poudre de combustible nucléaire dans un environnement de type boite à gants en tant que module de liaison dans un poste précis de fabrication d'éléments de combustible nucléaire, l'invention peut tout aussi bien s'appliquer à d'autres environnements également fortement métalliques et poussiéreux.

Dans cette application précise, dans laquelle la boite à gants comprend des parois translucides, telles qu'en Lexan®, Plexiglas® ou à base de verre au plomb, les inventeurs ont tout d'abord constaté que ces parois avaient une influence négligeable sur la fréquence d'accord et sur le niveau d'émission d'une étiquette passive à 13.56 MHz.

Les inventeurs ont ensuite étudié l'influence de la nature métallique du support à identifier sur l'étiquette passive à 13.56 MHz.

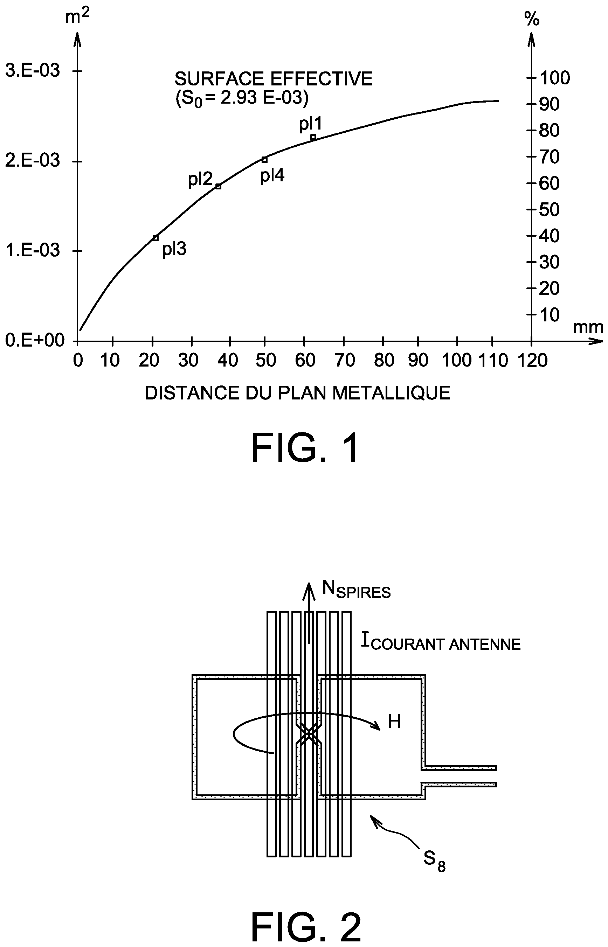

La figure 1 est une courbe montrant la variation de la surface effective d'une antenne d'étiquette passive à 13.56MHz par rapport à sa distance à un plan métallique caractérisant la paroi extérieur d'une hotte métallique, typiquement en inox.

On voit que l'influence est considérable en dessous de 30 mm, distance à laquelle la diminution de la surface effective de l'antenne de l'étiquette est déjà de l'ordre de 50%. Elle n'est égale qu'à 10% de la valeur réelle de l'antenne en deçà de 3.5mm et est quasi-nulle lorsque l'étiquette est en contact direct avec le support métallique.

Aussi, les inventeurs ont analysé qu'il était nécessaire d'augmenter la surface effective de l'antenne d'étiquette. Etant donné les dimensions très restreintes de l'environnement boite à gants, ils ont également analysé que la solution retenue devait respecter des contraintes d'encombrement très strictes. Ils ont alors pensé à deux solutions :
1/ soit insérer une plaque de ferrite entre l'antenne d'étiquette et le support métallique à identifier,
2/ soit mettre à distance l'étiquette tout en l'isolant électriquement du support métallique à identifier.

Pour la solution 1/ d'augmentation de surface effective, les inventeurs ont tout d'abord cherché des plaques de ferrite existante. Ils ont opté pour des plaques de ferrite du fabricant Kaschke en grade « K40 » dont la perméabilité est de 40 à 20°c qui est utilisable pour une fréquence d'utilisation jusqu'à plus de 50 MHz.

Ils ont alors testé des plaques de dimensions parfaitement définies. Ils ont utilisé le même protocole d'essais que celui décrit en référence avec la figure 1 mais en interposant entre l'antenne de l'étiquette de référence (13.56 MHz) et le plan métallique, une plaque de ferrite.

Les différents éléments de ferrite avec des plaques de dimensions suivantes (respectivement correspondant à la longueur, largeur et épaisseur) ont été testés :
- élément de ferrite N°1 : deux plaques côte à côte de dimensions totales: 200mm*120mm*3.75mm,
- élément de ferrite N°2 : une plaque de dimensions : 200mm*120mm*3.75mm,
- élément de ferrite N°3 : une plaque de dimensions : 100mm*56mm*3.75mm,
- élément de ferrite N°4 : deux plaques l'une sur l'autre de dimensions totales : 100mm*120mm*7.5mm.

Les surfaces effectives ont été reportées sur la figure 1 respectivement aux points pl1, pl2, pl3 et pl4. Il est ainsi possible d'établir une correspondance entre l'élément de ferrite utilisé et la distance d'air, c'est-à-dire d'isolant, équivalente.

On constate donc que pour une même épaisseur (3.75mm), la distance d'air équivalente est d'autant plus importante que la surface de plaque est grande. En effet, pour:
- l'élément de ferrite N°1, la surface effective est de 74% soit une distance équivalente d'air de 61mm,
- l'élément de ferrite N°2, la surface effective est de 56% soit une distance équivalente d'air de 36mm,
- l'élément de ferrite N°3, la surface effective est de 40% soit une distance équivalente d'air de 21mm.

On constate également que pour un même format de plaque (100mm*120mm), la surface effective augmente avec l'épaisseur de l'élément de ferrite mais le gain de distance équivalente d'air diminue avec l'épaisseur de ferrite. En effet, pour :
- l'élément de ferrite N°2, la surface effective est de 56% soit une distance équivalente d'air de 36mm,
- l'élément de ferrite N°4, la surface effective est de 67% soit une distance équivalente d'air de 48mm.

Compte tenu de l'encombrement disponible sur l'équerre de la hotte, les inventeurs ont choisi un élément de ferrite constitué d'une seule plaque de dimensions 60mm*100mm*3.75mm, ce qui conduit à une réduction de la surface apparente de l'antenne de l'étiquette passive de l'ordre de 50%.

Les inventeurs ont ensuite réalisé une expérimentation pour mesurer la fréquence de résonance d'une étiquette en fonction du montage de l'étiquette avec son élément en ferrite par rapport au plan métallique.

Une étiquette commercialisée par la société RAFSEC de dimensions 45*76 mm et incorporant une puce de dénomination commerciale « Philips I-Code SLI » et le code de vente 3000165, a été choisie comme étiquette de référence. Elle est placée au dessus de l'élément de ferrite N°3, ce dernier étant posée dessus le plan métallique de dimensions planes de 32cm*30cm.

Une boucle d'émission de champ magnétique est alors placée à une distance d'environ 25cms au dessus de l'étiquette.

Une sonde de champ magnétique en forme de huit S8, telle que représentée schématiquement en figure 2, est alors positionnée sur les spires de l'antenne de l'étiquette de manière à prélever uniquement le champ magnétique produit par la circulation du courant dans l'antenne de l'étiquette.

En parallèle, on place également une sonde de champ magnétique au centre d'une boucle d'émission afin de contrôler le champ magnétique émis.

On mesure alors la fréquence de résonance depuis la réponse obtenue par la sonde en forme de huit d'émission depuis la sonde S8 pour un champ primaire constant dont on fait varier la fréquence.

La fréquence de l'étiquette de référence intrinsèque mesurée a une valeur de 14.27 Mhz.

On constate que lorsque l'étiquette de référence est plaquée contre l'élément de ferrite N°3, la fréquence de résonance chute à une valeur de 10.0 Mhz.

Il y a donc une influence très sensible de la distance entre les spires de l'antenne RFID et l'élément de ferrite.

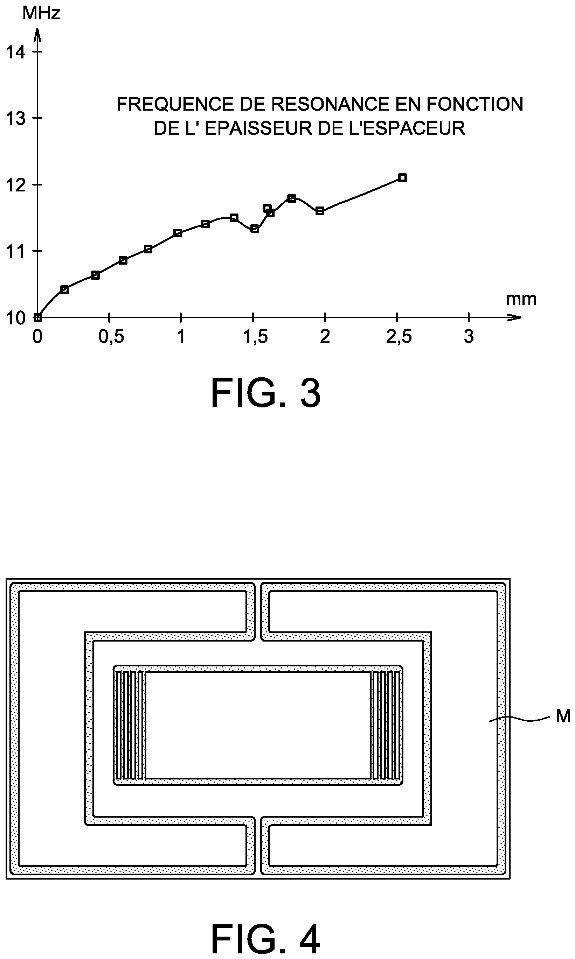

Des relevés de fréquence de résonance ont alors été effectués avec un espaceur de différentes épaisseurs placé entre l'étiquette RFID et l'élément de ferrite N°3. La courbe représentée en figure 3 illustre l'évolution de cette fréquence de résonance en fonction de l'épaisseur de l'espaceur. Cette courbe présente des points décalés par rapport à la tendance d'évolution : ils correspondent en fait à la différence de matériaux utilisés pour l'espaceur, à savoir respectivement du téflon, du polypropylène, du verre-époxy FR4. Ainsi, pour le point correspondant à une épaisseur égale à 1.6mm, il a été utilisé un espaceur sous la forme d'une plaque en verre-époxy FR4. Ceci montre que l'antenne de l'étiquette RFID est donc également sensible à la perméabilité électrique du matériau à proximité immédiate de ses spires. On peut en conclure qu'un matériau de perméabilité élevée est susceptible de provoquer une diminution plus importante de la fréquence de résonance. On peut en conclure également qu'avec un espaceur de 2mm, on peut augmenter la fréquence de résonance d'environ 2Mhz.

Les inventeurs ont alors conclu que dans le contexte de l'invention, où l'encombrement doit rester restreint, il n'était pas possible de définir un espaceur suffisamment peu épais pour parvenir à ramener la fréquence de résonance à sa valeur d'origine.

Les inventeurs ont alors pensé que deux moyens étaient envisageables pour ramener la fréquence de résonance à une valeur optimale:
- soit modifier l'antenne de l'étiquette mais cela impose d'avoir recours à une fabrication spécifique d'antenne RFID ou d'effectuer un report de circuits intégrés, tels que la puce I-code, sur un circuit d'antenne standard,
- soit adjoindre un circuit secondaire correcteur à une antenne RFID standard, c'est-à-dire une antenne disponible immédiatement sur le marché.

Au regard de la difficulté de réalisation et des coûts afférents, les inventeurs ont alors décidé de réaliser un circuit secondaire correcteur d'antenne RFID.

Après expérimentation, les inventeurs ont conclu qu'un circuit correcteur présent uniquement sur la partie externe de l'antenne RFID, c'est-à-dire la zone entre la spire moyenne de l'antenne de l'étiquette et le bord de la plaque de ferrite) ne permet pas d'obtenir une correction suffisante de la fréquence de résonance de l'antenne RFID.

Même si un bouclage en court-circuit agencé à l'intérieur du circuit d'antenne de l'étiquette réduit la surface effective de celle-ci, cet agencement permet avantageusement d'obtenir une correction de fréquence de résonance satisfaisante.

La figure 4 représente schématiquement un masque M d'un circuit de cuivre du correcteur utilisé pour l'étiquette RFID de référence. On voit sur cette figure 4 que le circuit interne présente des branches multiples munies de restriction dont leur coupure permet un réglage de géométrie.

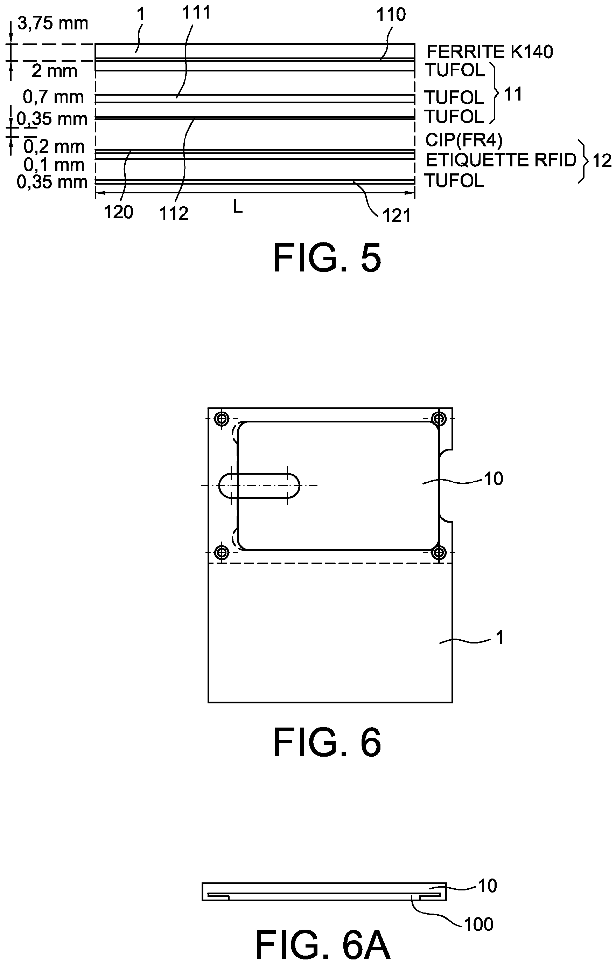

En figure 5, on a représenté en vue éclatée de côté un ensemble porte-étiquette 1 comprenant une étiquette de référence RFID et un élément de ferrite N°3 collée sur un circuit correcteur constitué d'un bouclage en court-circuit agencé à l'intérieur du bouclage du circuit de l'antenne de référence.

Plus exactement, l'ensemble est réalisé par collage de différentes couches de matériaux, à savoir :
- un élément 1 de ferrite N°3 (de type K40 commercialisé par la société Kaschke, de dimensions égales à 60*100*3.75mm),
- un espaceur 11 en matériau électriquement isolant et non magnétique constitué de trois 110, 111, 112 couches de tufol d'une épaisseur totale de l'ordre de 3mm,
- un assemblage 12 constitué de l'étiquette RFID collée sur un circuit imprimé en cuivre, d'une épaisseur de 35µm, réalisé sur un substrat 120 en FR4 d'une épaisseur de 0.2mm, l'étiquette étant protégée par une couche de tufol 121 d'une épaisseur de 0.35mm.

Pour la solution 2/ d'augmentation de surface effective, les inventeurs ont finalement retenu un porte-étiquette en polyéthylène PEHD permettant une mise à distance suffisamment éloignée de la masse métallique du support (conteneur) métallique à identifier. Pour l'application boite à gants, ils ont retenu une mise à distance avantageuse de l'ordre de 12 mm entre l'étiquette et le dessus de la partie métallique de l'anse de la hotte. En outre, un tel positionnement de l'étiquette au dessus de l'anse de la hotte conduit à écarter l'étiquette du corps de la hotte d'environ 40 mm.

Tel que représenté en figures 6 et 6A, le porte-étiquette 1 selon l'invention en PEHD comprend un logement 10 de l'étiquette à proprement parler qui comprend lui-même une glissière 100, ce qui permet de loger complètement l'étiquette passive RFID en utilisation et donc la protège de toutes les poussières susceptibles d'être présentes dans l'environnement, telles que la poudre de combustible nucléaire en suspension. La glissière 100 permet en outre une insertion et extraction aisées de l'étiquette si nécessaire.

En ce qui concerne le mode de fixation du porte-étiquette, il est prévu avantageusement de le percer de trous, typiquement au nombre de deux, pour une fixation par vis de préférence à la poignée de la hotte.

En ce qui concerne l'antenne du lecteur RFID, les inventeurs ont choisi comme hypothèse de considérer l'antenne comme étant une antenne résonante de type inductive avec une fréquence de résonance visée égale à la fréquence de l'étiquette soit 13.56 MHz et donc avec une impédance visée de 50 Ohms. Or, de par les connaissances sur ce type d'antenne, les inventeurs ont cherché à minimiser l'aspect électrique de celle-ci. Par aspect électrique, il faut comprendre que les différentes parties du circuit d'antenne peuvent présenter des différences de potentiels électriques et donc conférer des caractéristiques électriques variables à l'antenne. Autrement dit, l'antenne lecteur ne réalise pas uniquement un couplage électromagnétique avec l'étiquette passive.

Or, plus l'aspect électrique du lecteur est important, plus l'environnement fortement métallique est susceptible d'influer sur les caractéristiques inductives de l'antenne en la rendant instable, par exemple par effet de main.

Les inventeurs ont alors cherché une réalisation d'antenne qui minimise donc le plus possible l'aspect électrique. Or, les solutions connues qui s'offraient à eux, telles qu'un blindage électrique du circuit d'antenne ou un morcellement de celui-ci avec une symétrie électrique, ne convenaient pas en l'état car elles conduisent à un encombrement plus important du circuit de l'antenne lecteur.

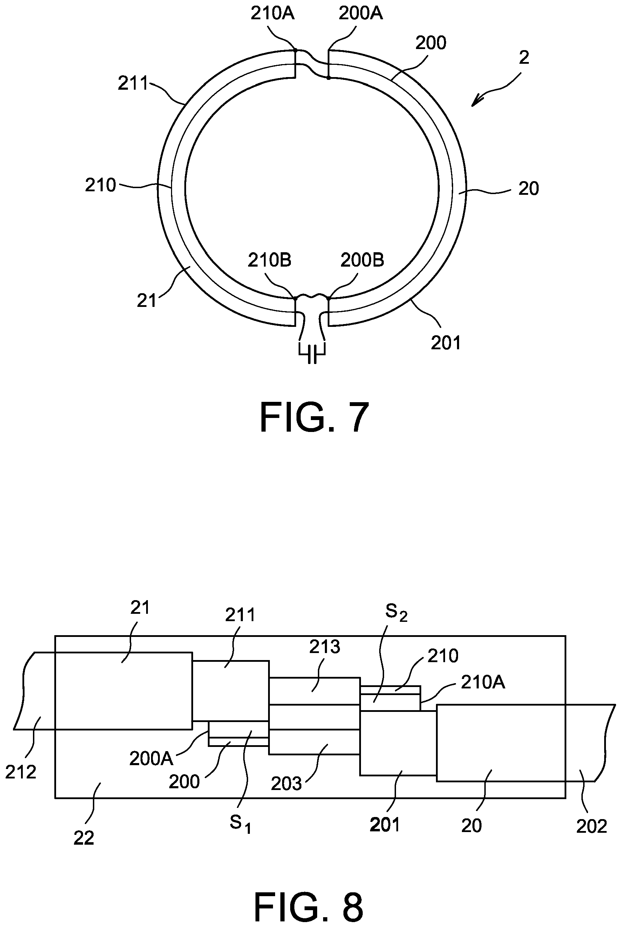

Aussi, les inventeurs ont ainsi défini une structure d'antenne telle que montrée en figure 7 : l'antenne 2 comprend, en tant que bouclage d'induction, deux tronçons 20, 21 de câble coaxial de longueur sensiblement identique. Chaque tronçon de câble coaxial 20, 21 comprend chacun une âme métallique 200, 210 et une tresse métallique entourant l'âme 201, 211. Les deux tronçons 20, 21 sont réunis entre eux d'une part à l'une de leur extrémité 200A, 210A, en reliant l'âme 200 de l'un à la tresse 211 de l'autre et réciproquement (âme 210 reliée à tresse 201) et d'autre part à l'autre de leur extrémité 200B, 210B, en reliant uniquement leurs tresses 201, 211 entre elles, leurs âmes 200, 210 étant séparées à cette autre extrémité. L'antenne présente ainsi en quelque sorte deux boucles sans morcellement.

Chaque tronçon de câble utilisé est issu d'un câble coaxial subminiature commercialisé par la société AXON sous la référence commerciale SM 50 avec un diamètre sensiblement égal à 1.05mm de capacité linéique de l'ordre de 97pF/m.

Typiquement, la longueur totale de l'anneau coaxial ainsi réalisé avec les discontinuités entre âme et tresses, est de l'ordre de 1.2m soit une capacité totale de 120pF et donc conduit à une fréquence de résonance intrinsèque de l'ordre de 14 MHz.

En outre, comme expliqué par la suite le diamètre très faible des tronçons permet de ne pas altérer la vision à travers des parois translucides d'enceinte à laquelle l'antenne lecteur peut être fixée.

La figure 8 montre en détail la réalisation avantageuse de la discontinuité entre âmes 200, 210 et tresses 201, 211. L'âme 200 d'un tronçon 20 est soudé au moyen d'une soudure S1 à la tresse 211 de l'autre tronçon 21 et réciproquement : l'âme 210 du tronçon 21 est soudé à la tresse 201 du tronçon 20 au moyen d'une soudure S2. Comme montré également, chaque tronçon comprend une gaine 203 respectivement 213 isolant l'âme 200 respectivement 210 de la tresse 201 respectivement 211. Il est également prévu une gaine isolante 202 respectivement 212 à l'extérieur de la tresse 201, respectivement 211. Enfin une gaine thermo-rétractable 22 isole complètement toute la discontinuité.

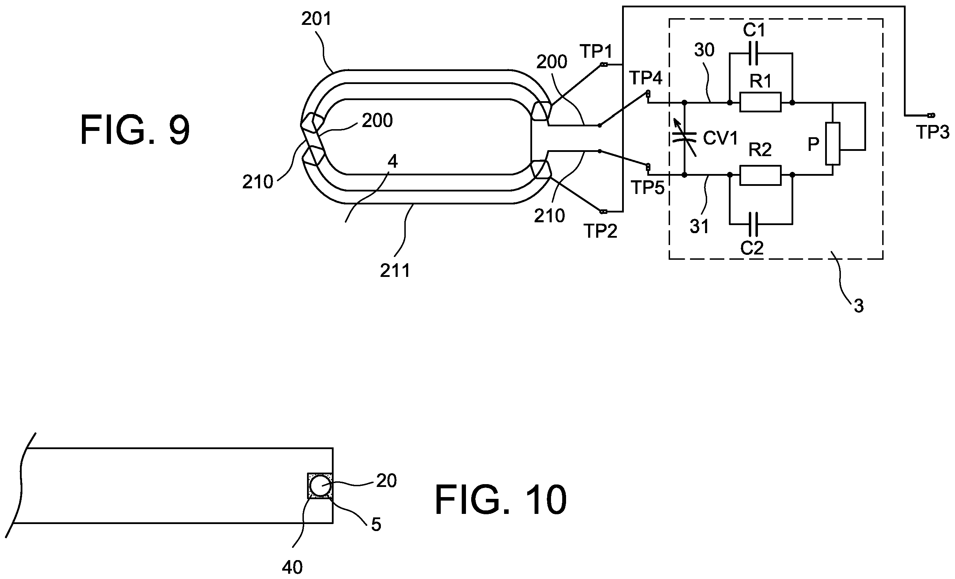

Comme représenté à la figure 9, les deux extrémités d'âmes de l'antenne lecteur séparées l'une de l'autre peuvent être reliées à une cellule électronique de correction 3 aux points TP4 et TP5. Cette cellule de correction 3 comprend en entrée une capacité variable CV1 reliant les deux âmes 200, 210 pour le réglage de la fréquence d'accord et un potentiomètre P pour adapter l'impédance typiquement à 50 Ohms, une fois l'antenne 2 en configuration installée dans l'environnement fortement métallique.

En outre, comme représenté, les deux lignes 30, 31 sont reliées entre elles par le potentiomètre et comprennent chacun un ensemble R1, C1 monté en parallèle respectivement R2, C2.

Typiquement, les valeurs sont les suivantes :
C1 = C2= 4.7pF
R1 = R2 = 12 kOhm
CV1 variable de 1.8 à 10pF
P variable de 0 à 200k.

Pour un environnement en boite à gants avec paroi translucide à base de verre au plomb, les inventeurs ont choisi d'utiliser une plaque-support 4 en matériau transparent. Plus exactement, les tronçons de câble coaxial 20, 21 sont insérés et collés dans une rainure 40 au moyen d'une colle 5 sur la périphérie de la plaque-support 4, comme illustré en détail en figure 6. Quel que soit le point à la périphérie de la plaque-support 4, le rayon de courbure des tronçons est inférieur à 4mm afin de ne pas générer trop de déformations mécaniques sur ceux-ci. La rainure 40 est en outre adaptée pour tenir compte de la surépaisseur engendrée par le croisement âme/tresse tel qu'illustré en figure 4.

Ainsi, on peut définir une plaque-support d'épaisseur lui permettant d'être insérée entre la paroi à base de plomb et l'autre paroi translucide. De ce fait, on évite toute influence métallique de la paroi à base de plomb. La plaque-support étant en outre en matériau translucide, elle n'altère pas la visibilité à travers la boîte à gants.

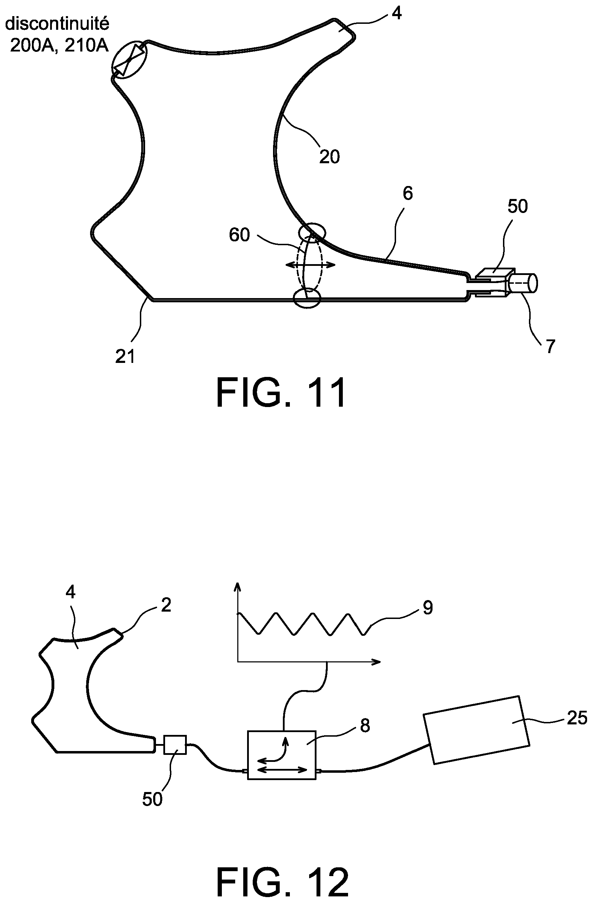

Pour alimenter l'antenne lecteur 2 en puissance, les inventeurs ont pensé à utiliser une solution de couplage électromagnétique avec une boucle primaire, ce qui permet d'alimenter le résonateur en puissance radiofréquence sans dégrader la robustesse au niveau des discontinuités de l'antenne à tronçons croisés comme présenté ci-dessus. Cela permet en outre de conserver la possibilité d'une adaptation d'impédance à 50 Ohm. La figure 11 montre schématiquement une telle boucle primaire 6 qui est ajoutée en partie le long de portions des tronçons 20, 21 de câble coaxial : la boucle 6 et les tronçons de câble 20, 21 sont agencées le plus proche possible l'une des autres, typiquement inférieur à 0.5mm. Dans la variante de réalisation d'insertion des tronçons de câble dans une rainure 40 à la périphérie de la plaque-support 4, la boucle primaire 6 est également insérée conjointement. Seule une portion 60 de la boucle primaire ne longe pas les tronçons de câble coaxial, cette portion étant insérée également de préférence dans la plaque-support 4. Typiquement, la boucle est réalisée par un fil de cuivre émaillé de diamètre de 0.2 à 0.3 mm, tels que ceux commercialisés sous la référence « Radiospares RS 357-716 ». Les angles de courbure sont ici aussi choisis pour ne pas générer trop de déformations : ils sont typiquement de l'ordre de 3 mm. Sur cette figure 11, on voit en outre qu'un boitier 50 qui loge la cellule de correction électronique 3 est monté à la discontinuité des âmes 200, 210 à proximité de la plaque-support 4, avec un connecteur 7 en bout : l'ensemble plaque-support 4, antenne lecteur RFID 2, boucle primaire d'alimentation 6, cellule de correction électronique forme ainsi un module autonome.

En figure 12, on a représenté le schéma de principe des différents moyens permettant le réglage de l'antenne-lecteur RFID une fois en configuration installée dans une boite à gants entre une paroi à base de verre au plomb et une paroi translucide en Plexiglas. Plus exactement, ce schéma montre les différents moyens permettant l'accord de la fréquence, typiquement à 13.56MHz, et l'adaptation d'impédance à 50 Ohm, de l'antenne lecteur RFID 2 décrite avec sa cellule de correction 3 et sa boucle primaire d'alimentation par couplage électromagnétique 6.

La méthode consiste à utiliser un coupleur directif 8 entre le module électronique lecteur 25 de l'antenne RFID et un oscilloscope 9. L'oscilloscope permet de visualiser le signal à 13.56MHz qui représente l'onde électromagnétique en retour sur le coupleur 8. On minimise ainsi l'amplitude de ce signal par action successive sur la capacité variable CV1 de la cellule de correction 3 en vue d'obtenir l'accord et sur le potentiomètre P en vue d'obtenir l'amortissement du circuit RLC d'antenne. Cette méthode est avantageuse car elle permet un réglage in-situ tenant compte de l'environnement fortement métallique réel en utilisant un minimum de moyens (coupleur directif 8, oscilloscope 9).

Dans un environnement de boîte à gants G, celle-ci comprend typiquement des cerclages métalliques C adaptés pour recevoir des ronds de gant de manipulation. Les inventeurs ont alors pensé judicieusement à définir une forme de circuit d'antenne lecteur afin que son signal électromagnétique soit amplifié par lesdits cerclages métalliques. Cette forme est déjà représentée aux figures 11 et 12.

En effet, un cerclage soumis au champ électromagnétique de l'antenne lecteur 2 développe une force électromagnétique et un courant secondaire circule alors dans ce cerclage. Ce cerclage en court-circuit est alors la source d'une émission secondaire de champ électromagnétique. Ainsi en adaptant la forme des tronçons d'antenne afin qu'elle épouse celle d'au moins un cerclage métallique sans l'entourer, le champ électromagnétique du cerclage vient s'ajouter à celui de l'antenne lecteur 2.

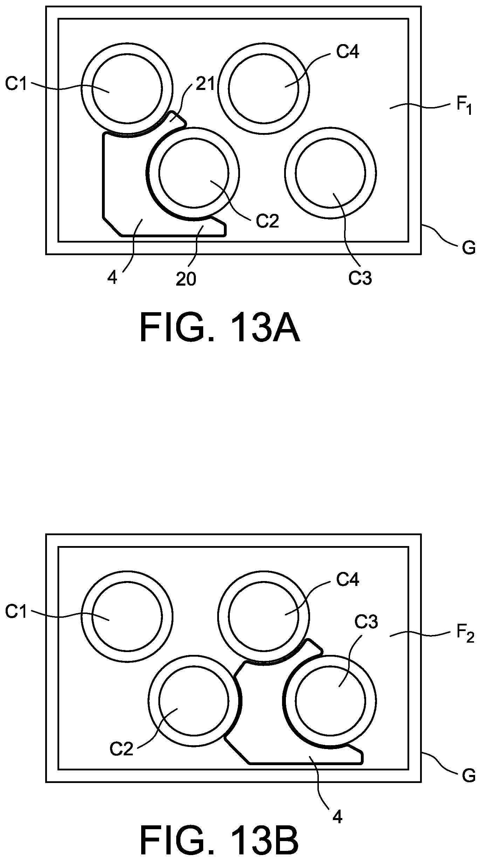

Deux modes d'implantation avantageux sur une même boîte à gants G d'un module comprenant l'antenne RFID lecteur 2 selon l'invention et la plaque-support à la périphérie de laquelle elle est fixé sont représentés aux figures 13A et 13B :
- en figure 13A, on voit que, sur l'une des faces F1 de la boîte à gants, la forme de la plaque-support 4 des tronçons d'antenne 20, 21 épouse celle de deux cerclages métalliques C1, C2 de ronds de gants de manipulation sans en entourer aucun,
- en figure 13B, on voit que sur une autres face F2 de la boite à gants, la forme de la plaque-support 4 des tronçons d'antenne 20, 21 épouse celles de trois cerclages métalliques C1, C2, C3 de ronds de gants de manipulation sans en entourer aucun.

La solution selon l'invention permet une lecture fiable de hottes métalliques en défilement dans les boites à gants, et ce sans modifications substantielles à la fois des hottes et des boites à gants puisque le dispositif d'identification par radiofréquence proposé peut être implanté facilement sans avoir à sur dimensionner les hottes et boites à gants existantes ou à les redéfinir complètement.

## Revendications

1. Dispositif d'identification d'un support métallique présent dans un environnement fortement métallique susceptible d'être poussiéreux, comprenant une étiquette passive d'identification par radiofréquence (RFID), un porte-étiquette (1) en matériau isolant électriquement adapté pour être fixé au support métallique et pour agencer l'étiquette à distance de ce dernier et comprenant un logement (10) adapté pour loger complètement l'étiquette et, un lecteur RFID dont l'antenne (2) comprend, en tant que bouclage d'induction, deux tronçons (20, 21) de câble coaxial de longueur sensiblement identique et comprenant chacun une âme métallique (200, 210) et une tresse métallique (201, 211) entourant l'âme, les deux tronçons étant réunis entre eux d'une part à l'une de leur extrémité (200A, 210A) en reliant l'âme (200) de l'un à la tresse (211) de l'autre et réciproquement (210, 201) et d'autre part à l'autre de leur extrémité (200B, 210B) en reliant uniquement leurs tresses entre elles, leurs âmes étant séparées à cette autre extrémité.

2. Dispositif d'identification selon la revendication 1, dans lequel le porte-étiquette est constitué d'une pièce en matériau isolant électriquement comprenant un logement à glissière (100) dans laquelle l'étiquette RFID peut coulisser.

3. Dispositif d'identification selon la revendication 2, dans lequel la pièce en matériau isolant électriquement est à base de polyéthylène (PEHD).

4. Dispositif d'identification selon l'une des revendications 1 à 3, dans lequel les dimensions du porte-étiquette sont adaptées pour agencer l'étiquette à une distance d'au moins 4 mm du support métallique.

5. Dispositif d'identification d'un support métallique présent dans un environnement fortement métallique susceptible d'être poussiéreux, comprenant une étiquette passive d'identification par radiofréquence (RFID), un porte-étiquette comprenant un élément (1) en ferrite adapté pour être fixé au support métallique eL pour agencer l'étiquette à distance de ce dernier comprenant un bouclage (120) en court-circuit agencé à l'intérieur du bouclage de circuit de l'antenne d'étiquette et, un lecteur (RFID) dont l'antenne (2) comprend, en tant que bouclage d'induction, deux tronçons (20, 21) de câble coaxial de longueur sensiblement identique et comprenant chacun une âme métalliques (200, 210) et une tresse métallique (201, 211) entourant l'âme, les deux tronçons étant réunis entre eux d'une part à l'une de leur extrémité (20CA, 210A) en reliant l'âme (200) de l'un à la tresse (211) de l'autre et réciproquement (210, 201) et d'autre part à l'autre de leur extrémité (200B, 210B) en reliant uniquement leurs tresses entre elles, leurs âmes étant séparées à cette autre extrémité.

6. Dispositif d'identification selon l'une quelconque des revendications précédentes, dans lequel le diamètre des tronçons de câble coaxial est inférieur ou égal à 1,05 mm.

7. Dispositif d'identification selon l'une quelconque des revendications précédentes, comprenant :
- une cellule électronique de correction (5) reliée aux âmes séparées de la boucle d'antenne, la cellule comprenant des moyens (P, CV1) pour adapter l'impédance et pour accorder la fréquence de la boucle d'antenne en configuration installée dans l'environnement ;
- et/ou une boucle primaire (6) pour alimenter la boucle d'antenne par couplage électromagnétique, la boucle primaire étant reliée à un module électronique (25) du lecteur adapté pour lire des données d'identification issues de l'étiquette passive ;
- et/ou une étiquette adaptée pour émettre à une fréquence de 13.56 MHZ et dans lequel les deux tronçons de câble coaxial de l'antenne du lecteur présentent une capacité moyenne de 97pF/m et une longueur totale de l'ordre de 1.2m.

8. Dispositif d'identification selon la revendication 1 ou selon la revendication 5, le porte-étiquette du dispositif d'identification étant fixé sur un conteneur métallique.

9. Dispositif d'identification selon la revendication 8, le conteneur métallique constituant une hotte adaptée pour contenir des éléments de combustible nucléaire, tels que de la poudre d'oxydes de plutonium et/ou d'oxydes d'uranium.

10. Dispositif d'identification selon l'une des revendications 1 à 7, l'antenne du lecteur RFID étant fixée à une paroi d'une enceinte (G) comprenant des parois délimitant un environnement fortement métallique confiné susceptible d'être poussiéreux.

11. Dispositif d'identification selon la revendication 10, l'enceinte (G) ayant des parois (F1, F2) translucides, les tronçons d'antenne (20, 21) étant fixés à la périphérie d'une plaque-support (4) transparente elle-même fixée à l'une des parois translucides de l'enceinte.

12. Dispositif d'identification selon la revendication 11, les tronçons d'antenne étant fixés à la périphérie de la plaque-support de sorte que leur rayon de courbure est inférieur à 4 mm tout le long de ladite périphérie.

13. Dispositif d'identification selon la revendication 11, au moins une desdites parois translucides de l'enceinte comprenant un panneau à base de verre au plomb et un autre panneau à base de verre autre que du plomb, la plaque-support des tronçons d'antenne étant intercalée entre les deux panneaux de la paroi translucide.

14. Dispositif d'identification selon l'une des revendications 10 à 13, une paroi de l'enceinte étant percée d'orifices entourés chacun d'un cerclage métallique (C1, C2, C3, C4) adapté pour recevoir un gant de manipulation d'un conteneur à l'intérieur de l'enceinte et, dans laquelle la forme de la plaque-support des tronçons d'antenne épouse celle d'au moins un cerclage métallique sans l'entourer, avantageusement la forme de la plaque-support des tronçons d'antenne épouse celles d'au moins deux cerclages métalliques (C1, C2, C3) sans n'en entourer aucun.

15. Application du dispositif d'identification selon l'une quelconque des revendications 1 à 7, à l'identification de hottes contenant des éléments de combustibles nucléaires dans leur unité de fabrication.

## Patentansprüche

1. Vorrichtung zum Identifizieren eines metallischen Trägers, der in einem stark metallischen Umfeld vorhanden ist, das staubhaltig sein kann, enthaltend eine passive Kennzeichnung zur Radiofrequenzidentifizierung (RFID), einen Kennzeichnungsträger (1) aus elektrisch isolierendem Material, der dazu ausgebildet ist, an den Metallträger befestigt zu werden und die Kennzeichnung von letzterem entfernt anzuordnen, und enthaltend eine Aufnahmeausnehmung (10), die dazu ausgebildet ist, die Kennzeichnung vollständig aufzunehmen, sowie einen RFID-Leser, dessen Antenne (2) als Induktionsschleife zwei koaxiale Kabelabschnitte (20, 21) mit im Wesentlichen identischer Länge aufweist, die jeweils einen metallischen Kern (200, 210) und ein den Kern umgebendes, metallisches Geflecht (201, 211) aufweisen, wobei die beiden Abschnitte einerseits an ihrem einen Ende (200A, 210A) miteinander vereint sind, indem der Kern (200) des einen mit dem Geflecht (211) des anderen und umgekehrt (201, 201) verbunden ist, sowie andererseits an ihrem anderen Ende (200B, 201B), indem nur deren Geflechte miteinander verbunden sind, wobei deren Kerne an diesem anderen Ende getrennt sind.

2. Identifizierungsvorrichtung nach Anspruch 1, wobei der Kennzeichnungsträger aus einem Teil aus elektrisch isolierendem Material besteht, das eine Aufnahmeausnehmung mit Gleitführung (100) aufweist, in welcher die RFID-Kennzeichnung verschiebbar ist.

3. Identifizierungsvorrichtung nach Anspruch 2, wobei das Teil aus elektrisch isolierendem Material auf Basis von Polyethylen (PE-HD) besteht.

4. Identifizierungsvorrichtung nach einem der Ansprüche 1 bis 3, wobei die Abmessungen des Kennzeichnungsträgers dazu ausgelegt sind, die Kennzeichnung in einer Entfernung von mindestens 4 mm vom metallischen Träger anzuordnen.

5. Vorrichtung zum Identifizieren eines metallischen Trägers, der in einem stark metallischen Umfeld vorhanden ist, das staubhaltig sein kann, enthaltend eine passive Kennzeichnung zur Radiofrequenzidentifizierung (RFID), einen Kennzeichnungsträger (1) mit einem Element (1) aus Ferrit, das dazu ausgebildet ist, an den metallischen Träger befestigt zu werden und die Kennzeichnung von letzterem entfernt anzuordnen, und enthaltend eine Kurzschlussschleife (120), die innerhalb der Schaltungsschleife der Kennzeichnungsantenne angeordnet ist, sowie einen Leser (RFID), dessen Antenne (2) als Induktionsschleife zwei koaxiale Kabelabschnitte (20, 21) mit im Wesentlichen identischer Länge aufweist, die jeweils einen metallischen Kern (200, 210) und ein den Kern umgebendes, metallisches Geflecht (201, 211) aufweisen, wobei die beiden Abschnitte einerseits an ihrem einen Ende (200A, 210A) miteinander vereint sind, indem der Kern (200) des einen mit dem Geflecht (211) des anderen und umgekehrt (201, 201) verbunden ist, sowie andererseits an ihrem anderen Ende (200B, 201B), indem nur deren Geflechte miteinander verbunden sind, wobei deren Kerne an diesem anderen Ende getrennt sind.

6. Identifizierungsvorrichtung nach einem der vorangehenden Ansprüche, wobei der Durchmesser der koaxialen Kabelabschnitte geringer oder gleich 1,05 mm ist.

7. Identifizierungsvorrichtung nach einem der vorangehenden Ansprüche, enthaltend:
- eine elektronische Korrekturzelle (5), die mit den getrennten Kernen der Antennenschleife verbunden ist, wobei die Zelle Einrichtungen (P, CV1) enthält, um die Impedanz anzupassen und um die Frequenz der Antennenschleife bei in dem Umfeld installierter Konfiguration abzustimmen;
- und/oder einen Primärkreis (6) zum Versorgen der Antennenschleife durch elektromagnetische Kopplung, wobei der Primärkreis mit einem elektronischen Modul (25) des Lesers verbunden ist, das dazu ausgelegt ist, von der passiven Kennzeichnung stammende Identifizierungsdaten einzulesen;
- und/oder eine Kennzeichnung, die dazu ausgelegt ist, bei einer Frequenz von 13,56 MHz zu senden, wobei die beiden koaxialen Kabelabschnitte der Antenne des Lesers eine mittlere Kapazität von 97 pF/m und eine Gesamtlänge in der Größenordnung von 1,2 m aufweisen.

8. Identifizierungsvorrichtung nach Anspruch 1 oder nach Anspruch 5, wobei der Kennzeichnungsträger der Identifizierungsvorrichtung an einem metallischen Behälter befestigt ist.

9. Identifizierungsvorrichtung nach Anspruch 8, wobei der metallische Behälter eine Wanne bildet, die dazu ausgelegt ist, Kernbrennelemente zu beinhalten, wie etwa Plutoniumoxidpulver und/oder Uranoxidpulver.

10. Identifizierungsvorrichtung nach einem der Ansprüche 1 bis 7, wobei die Antenne des RFID-Lesers an eine Wand einer Umhüllung (G) befestigt ist, die Wände aufweist, die ein abgeschlossenes, stark metallisches Umfeld eingrenzen, das staubhaltig sein kann.

11. Identifizierungsvorrichtung nach Anspruch 10, wobei die Umhüllung (G) lichtdurchlässige Wände (F1, F2) hat, wobei die Antennenabschnitte (20, 21) am Umfang einer transparenten Trägerplatte (4) befestigt sind, die ihrerseits an einer der lichtdurchlässigen Wände der Umhüllung befestigt ist.

12. Identifizierungsvorrichtung nach Anspruch 11, wobei die Antennenabschnitte am Umfang der Trägerplatte so befestigt sind, dass deren Krümmungsradius entlang des gesamten Umfangs geringer als 4 mm ist.

13. Identifizierungsvorrichtung nach Anspruch 11, wobei zumindest eine der lichtdurchlässigen Wände der Umhüllung eine Platte auf Basis von Bleiglas und eine weitere Platte auf Basis eines anderen Glases als Bleiglas enthält, wobei die Trägerplatte der Antennenabschnitte zwischen den beiden Platten der lichtdurchlässigen Wand eingesetzt ist.

14. Identifizierungsvorrichtung nach einem der Ansprüche 10 bis 13, wobei eine Wand der Umhüllung mit Bohrungen versehen ist, die jeweils von einer Metallumreifung (C1, C2, C3, C4) umgeben werden, die dazu ausgelegt ist, einen Handhabungshandschuh zum Handhaben einer Behälters innerhalb der Umhüllung aufzunehmen und wobei die Form der Trägerplatte der Antennenabschnitte sich an die von zumindest einer Metallumreifung anschmiegt, ohne diese zu umgreifen, wobei vorteilhaft die Form der Trägerplatte der Antennenabschnitte sich an die von zumindest zwei Metallumreifungen (C1, C2, C3) anschmiegt, ohne eine von diesen zu umgreifen.

15. Anwendung der Identifizierungsvorrichtung nach einem der Ansprüche 1 bis 7 zum Identifizieren von Kernbrennelemente enthaltenden Wannen in ihrer Fertigungseinheit.

## Claims

1. Device for identifying a metal substrate present in a strongly metallic environment that may also be dusty, comprising a passive radio-frequency identification (RFID) label, a label carrier (1) made of electrically insulating material suitable for being attached to the metal substrate and to position the label at a distance therefrom and comprising a housing (10) suitable for completely housing the label, and an RFID reader having an antenna (2) that includes, as an induction loop, two sections (20, 21) of coaxial cable having a substantially identical length and each including a metal core (200, 210) and a metal pleat (201, 211) surrounding the core, the two sections being linked together on the one hand at one end thereof (200A, 210A) by connecting the core (200) of one to the pleat (211) of the other and conversely (210, 201) and, on the other hand, at the other end thereof (200B, 210B) by connecting only the pleats together, the cores thereof being separated at said other end.

2. Identification device according to claim 1, in which the label carrier is constituted of a part made of electrically insulating material comprising a slide housing (100) in which the RFID label can slide.

3. Identification device according to claim 2, in which the part made of electrically insulating material is based on polyethylene (HDPE).

4. Identification device according to one of claims 1 to 3, in which the dimensions of the label carrier are adapted to position the label at a distance of at least 4mm from the metal substrate.

5. Device for identifying a metal substrate present in a strongly metallic environment that may also be dusty, comprising a passive radio-frequency identification (RFID) label, a label carrier comprising a ferrite element (1) suitable for being attached to the metal substrate and to position the label at a distance therefrom comprising a short-circuit looping (120) laid out inside the circuit looping of the label antenna, and a reader (RFID) having an antenna (2) that includes, as an induction loop, two sections (20, 21) of coaxial cable having a substantially identical length and each including a metal core (200, 210) and a metal pleat (201, 211) surrounding the core, the two sections being linked together on the one hand at one end thereof (200A, 210A) by connecting the core (200) of one to the pleat (211) of the other and conversely (210, 201) and, on the other hand, at the other end thereof (200B, 210B) by connecting only the pleats together, the cores thereof being separated at said other end.

6. Identification device according to any of the preceding claims, in which the diameter of the sections of coaxial cable is less than or equal to 1.05mm.

7. Identification device according to any of the preceding claims, comprising:
- an electronic correction cell (5) connected to the cores separated from the antenna loop, the cell comprising means (P, CV1) for adapting the impedance and tuning the frequency of the antenna loop in installed configuration in the environment,
- and/or a primary loop (6) to supply the antenna loop by electromagnetic coupling, the primary loop being connected to an electronic module (25) of the reader suitable for reading identification data coming from the passive label,
- and/or a label is suitable for emitting at a frequency of 13.56MHz and in which the two sections of coaxial cable of the antenna of the reader have an average capacitance of 97pF/m and a total length of the order of 1.2m.

8. Identification device according to claim 1 or claim 5, the label carrier of the identification device being attached to the metallic container.

9. Identification device according to claim 8, constituting a cask suitable for containing nuclear fuel elements, such as the powder of plutonium oxides and/or uranium oxides.

10. Identification device according any of the claims 1 to 7, the antenna of the RFID reader being attached with at least one wall of the enclosure (G) comprising walls demarcating a confined strongly metallic environment that may also be dusty.

11. Identification device according claim 10, the enclosure (G) having walls (F1, F2) that are translucent, and in which the sections of antenna (20, 21) are attached to the periphery of a transparent plate-support (4) itself attached to one of the translucent walls of the enclosure.

12. Identification device according claim 11, the sections of antenna are attached to the periphery of the plate-support such that their radius of curvature is less than 4mm along the entire periphery.

13. Identification device according claim 11, in which at least one of the translucent walls comprises a panel based on lead glass and another panel based on glass other than lead, the plate-support of the sections of antenna being inserted between the two panels of the translucent wall.

14. Identification device according to any of the claims 10 to 13, in which one wall is pierced with holes each surrounded by a metal banding (C1, C2, C3, C4) suitable for receiving a glove for handling a container inside the enclosure and in which the shape of the plate-support of the sections of antenna hugs that of at least one metal banding without surrounding it, advantageously the shape of the plate-support of the sections of antenna hugs those of at least two metal bandings (C1, C2, C3) without surrounding any thereof.

15. Application of the identification device according to any of claims 1 to 7, the identification of casks containing nuclear fuel elements in the production unit thereof.
